# FASCICULE DE BREVET EUROPEEN

(11) **EP 0 417 260 B1**
(45) Date de publication et mention de la délivrance du brevet: **15.09.1993**
(21) Numéro de dépôt: 90906243.2
(22) Date de dépôt: 27.03.1990
(51) Int. Cl.: A61C 9/00

(54) **POSITIONNEUR PROTHETIQUE POUR L'ART DENTAIRE**
POSITIONIEREINRICHTUNG FÜR EINE ZAHNPROTHESE
PROSTHETIC POSITIONING DEVICE FOR DENTISTRY

(30) Priorité: 28.03.1989 FR 8903977; 14.09.1989 FR 8912062
(43) Date de publication de la demande: 20.03.1991
(73) Titulaire: Berceaux, Pierre, F-51100 Reims (FR)
(72) Inventeur: Berceaux, Pierre, F-51100 Reims (FR)
(74) Mandataire: Gérardin, Robert Jean René
(86) Numéro de dépôt international: FR9000206
(87) Numéro de publication internationale: WO9011056

(56) Documents cités:
- WO-A-90/6114
- DE-B- 1 566 194
- DE-U- 8 600 632
- FR-A- 2 157 331
- GB-A- 866 118
- US-A- 4 240 605
- US-A- 4 801 264

## Description

L'invention concerne un positionneur prothétique destiné à permettre de rendre amovible des portions d'empreintes prothétiques et de réaliser celles-ci par coulée en une seule phase.

Pour réaliser un moulage dentaire, la technique utilisée jusqu'alors consistait à remplir l'empreinte avec un matériau de moulage, puis à retourner celle-ci sur un tas du même matériau (le plus souvent du plâtre) ou bien à mettre cette empreinte dans un moule standard préalablement rempli avec le matériau complémentaire.

Cependant, cette pratique devient assez délicate lorsqu'elle doit être employée avec un matériau à base de résine, qui doit être coulé liquide, ce qui rend impossible le retournement de l'empreinte.

Aussi, actuellement, pour rendre amovible les deux éléments du moulage, a-t'on recourt, principalement, à un système de pivots de forme variable ou à la technique du fraisage.

Le système de pivots fait appel, le plus souvent, à des pivots simples ou doubles. Leur solidarisation à l'empreinte est obtenue en les fixant sur celle-ci par piquage, en les mettant en place dans du plâtre fluide en repérant l'emplacement sur l'empreinte, ou par l'intermédiaire d'une plaque support fixée sur l'empreinte, comme cela est décrit dans le brevet d'invention français 2.157.331. Toutefois, ces techniques ne permettent pas d'obtenir de parallélisme entre les éléments rendus ainsi amovibles ; aussi sont-elles réservées à des travaux unitaires ou peu importants.

La technique du fraisage, qui permet de palier au manque de parallélisme des éléments amovibles qui constitue un handicap majeur pour la réalisation des bridges en céramique et autres travaux de précision, consiste à réaliser, par coulage, un moulage dont la base est rendue plane pour permettre un fraisage préalable à la mise en place de pivots qui peuvent être munis de gaines. Ces pivots sont noyés dans un nouveau moulage, après avoir isolé le moulage primaire à l'aide d'une couche de vernis.

Les éléments sont ensuite rendus amovibles par sciage, comme dans la technique précédemment décrite. Malgré cela, cette technique de fraisage entraîne de nombreux déboires: plâtre cassé, obturations de gaines, etc.... Ainsi, est-on tenu de recourir à un investissement onéreux et à prendre des précautions se traduisant par une perte de temps importante.

On connaît déjà des dispositifs permettant de rendre amovible des portions d'empreintes prothétiques par découpe à la scie, tels que ceux décrits dans le brevet français 2.623.081 et la demande de brevet européen EP.0.317.397.A1. Ces dispositifs se présentent sous la forme de systèmes enfichables ou encliquetables, qui ne permettent pas d'obtenir, de ce fait, un contact suffisamment étroit entre les parties, qui provoquent des dislocations lors des désencliquetages et des interpositions de déchets dans le plan de joint, qui faussent le résultat ; aussi, dans la plupart des cas, l'empreinte doit-elle être coulée en deux phases.

On connaît déjà un positionneur prothétique pour l'art dentaire permettant de rendre amovible des portions d'empreintes prothétiques et d'obtenir celles-ci par coulée en une seule phase, tel que celui décrit dans le brevet de la République Fédérale d'Allemagne n° DE.A.3.103.637, qui se caractérise par l'utilisation d'un encliquetage par bouton pression pour solidariser les deux éléments par l'intermédiaire d'un interface approprié dans lequel viennent s'implanter des pivots coniques. Les pivots métalliques prennent place dans des cavités de mêmes dimensions réalisées dans le matériau du moulage ; aussi, ces cavités peuvent-elles devenir des réceptacles pour des corps étrangers, qui, par pression, se tassent et s'incrustent dans le matériau, ; ce qui les rend trés difficile à extraire et, de ce fait, contrarie le bon positionnement des éléments l'un par rapport à l'autre et provoque une usure des angles qui se traduit par un jeu.

La présente invention a pour but de remédier à ces inconvénients. Cette invention, telle qu'elle est caractérisée dans les revendications, résout le problème consistant à créer un positionneur prothétique pour l'art dentaire permettant de couler une empreinte rapidement avec des matériaux qui peuvent être fluides, tels que les résines ; d'obtenir des éléments amovibles rigoureusement parallèles entre eux ; de retirer aisément les maquettes prothétiques en cire, ou autre matière tendre, ainsi que les éléments sur lesquels sont montées des parties réalisées dans un matériau délicat, telle que la céramique, qui peuvent s'éffriter et doivent être, en conséquence, aisément manipulés en toute garantie ; de contrôler aisément la présence de corps étrangers dans le dispositif tout en pouvant éliminer aisément ceux-ci ; et de se prêter à des modificaitons ou adaptations ultérieures par simple passage sur une meule taille-plâtre.

Les avantages obtenus grâce à cette invention consistent essentiellement en ceci que le moulage est réalisé en une seule opération grâce au ruban assurant le coffrage, que l'élément positionneur, rendu amovible, est parfaitement guidé et repositionné par l'élément dans lequel il s'emboîte et qui reste sur le moulage, que la mise en place des éléments assemblés peut s'effectuer à l'aide d'un paralléliseur par l'intermédiaire d'un embout de forme appropriée, que les maquettes prothétiques peuvent, quel que soit leur nombre, être retirées simultanément et solidairement par l'intermédiaire des languettes prévues à cet effet, et que l'embase des pivots peut prendre des formes appropriées à celles des maxillaires, alors que les parties assurant l'emboîtement conservent la même forme et les mêmes dimensions.

D'autres caractéristiques et avantages apparaîtront dans la description qui va suivre d'un positionneur prothétique réalisé selon l'invention, donné à titre d'exemple non limitatif au regard des dessins annexés sur lesquels :
- la figure 1 représente une vue en coupe longitudinale de l'ensemble monté,
- la figure 2 représente une vue de dessus de l'ensemble monté,
- la figure 3 représente une vue en coupe de l'embout de positionnement de la partie évasée par l'intermédiaire d'un paralléliseur,
- la figure 4 représente une vue de face du ruban de rétention développé,

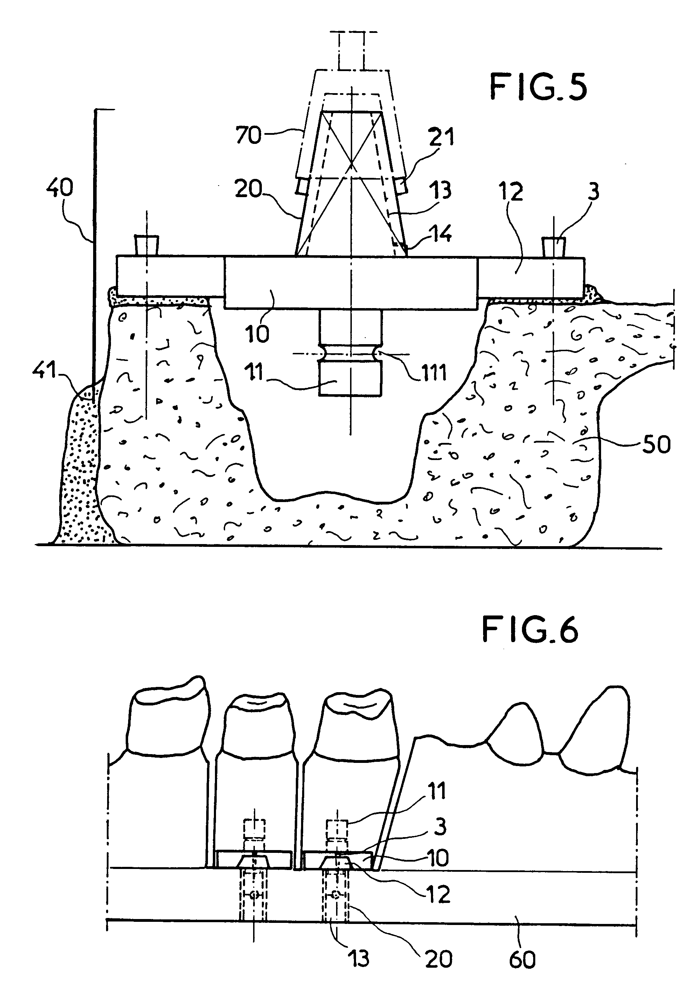

- la figure 5 représente une vue en coupe transversale d'une empreinte et d'un moulage au niveau d'un positionnement prothétique,
- la figure 6 représente une vue de côté partielle en coupe du moulage positif après exécution des traits de scie.

Les figures représentent un positionneur prothétique pour l'art dentaire selon l'invention,constitué principalement d'un élément positionneur **10** comportant un pivot **11** muni d'une gorge de rétention **111**, une partie mâle **13** à tenon d'indexation **14**, venant s'emboîter dans un élément évasé **20**, muni d'ergots de rétention **21** et d'une mortaise d'indexation **22**, et de deux languettes **12** comportant des orifices **121** dans lesquels s'insèrent des chevilles **3** de solidarisation au bord de l'empreinte **50**, ainsi que d'un ruban **40** à ergots **41** et à fentes de solidarisation **42** et **43** assurant le coffrage latéral du surmoulage **60**.

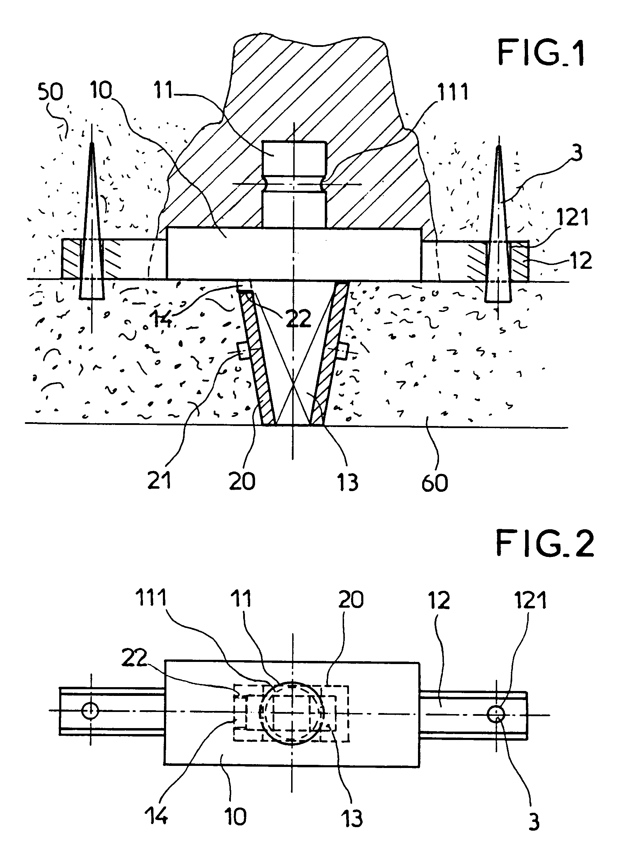

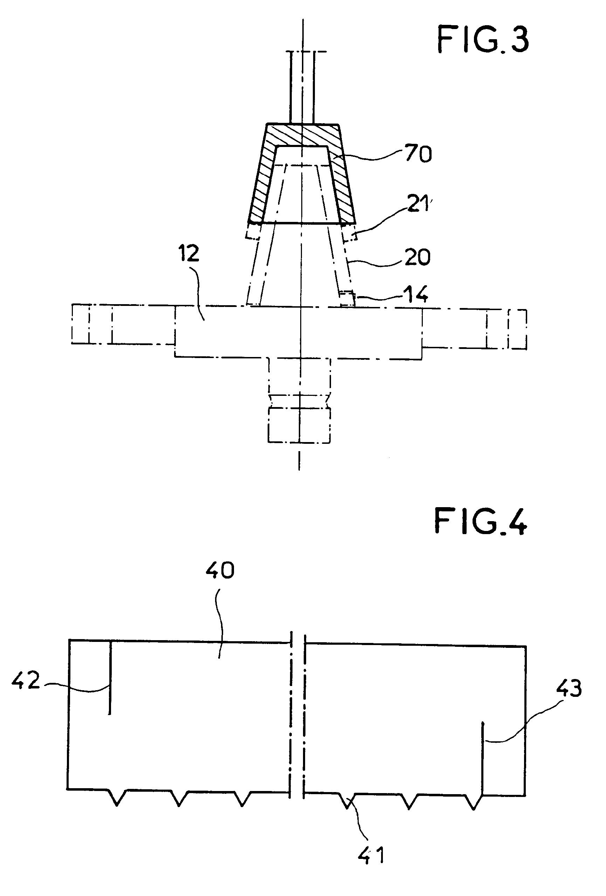

En examinant plus en détail les figures 1, 2 et 3, on remarque que, compte-tenu de la forme évasée de l'élément **20**, faisant corps avec l'empreinte positive par l'intermédiaire des ergots **21** et de la section dégressive du pivot **11** de l'élément positionneur **10**, ces deux éléments peuvent être, après sciage transversal du moulage, facilement solidarisés par emboîtage en respectant rigoureusement l'orientation donnée initialement à l'élément évasé **20** par le paralléliseur, par l'intermédiaire d'un embout **70** de forme appropriée,au moment de la mise en place du positionneur dans l'empreinte négative, étant donnée la section rectangulaire donnée à la partie mâle **13** de l'élément positionneur, à l'élément évasé **20** et à la présence des moyens d'indexation **14** et **22**. Les éléments **10** et **20** constituant les parties principales du positionneur prothétique peuvent donc être ainsi, à volonté, solidarisés ou désolidarisés par simple coulissement doux de la partie mâle **13** dans le creux de l'élément évasé **20** ; d'autant que les parties mâles **13** peuvent être facilement chassées de l'extérieur, compte-tenu de l'affleurement de l'élément évasé **20** par rapport au surmoulage **60**. Quant aux languettes **12**, elles permettent, comme on le voit, de solidariser, de façon précise, le positionneur **10** à l'empreinte négative et de manipuler l'élément prothétique après sciage, seul ou en combinaison avec d'autres. Dans ce dernier cas, les extrémités des languettes sont reliées par des barrettes assemblées par collage ou autre moyen du genre.

On remarquera aussi que la double ouverture des éléments évasés **20** permet d'éviter tout engorgement de l'intérieur de ceux-ci par des débris de matériaux, qui peuvent être, de ce fait, aisément éliminés, compte-tenu de l'affleurement de l'extrémité des éléments évasés **20** par rapport à la face externe du surmoulage **60**.

Le corps de l'élément positionneur **10** peut avoir une forme trapézoïdale tenant compte de la position des dents concernées.

Le procédé décrit ci-dessous, illustré par les figures 6 et 7, fera mieux comprendre l'intérêt du dsipositif comparativement à ceux existant déjà dans l'état de la technique et qui ont été évoqués dans la partie introductive de la présente description.

Ce procédé consiste à :
- fixer l'empreinte **50** sur un socle avec de la pâte à modeler afin de l'immobiliser,
- disposer de la pâte à modeler sur le pourtour de l'empreinte,
- mettre en place les positionneurs prothétiques dans le sillon de l'empreinte, en utilisant un paralléliseur muni de l'embout **70**, dans lequel s'emboîte l'élément évasé **20** du positionneur, jusqu'à mise en contact avec les ergots **21**,
- immobiliser les positionneurs par rapport à l'empreinte en utilisant des chevilles **3**, introduites dans les orifices **121** existant dans les languettes **12**, puis piquées dans la pâte à modeler disposée sur le rebord de l'empreinte **50**,
- procéder au moulage prothétique,
- disposer autour de l'empreinte le ruban en matériau semi-rigide **40** en enfonçant les ergots **41** dans la pâte à modeler, puis en reliant les deux extrémités par imbrication des fentes **42** et **43** l'une dans l'autre,
- couler un surmoulage **60** sur le moulage prothétique, jusqu'à affleurement de l'extrémité libre de l'élément évasé **20**,
- le temps de prise et de durcissement des matériaux de moulage étant écoulé, le ruban de coffrage **40** est retiré et le moulage de l'empreinte est sorti du porte-empreinte afin de pouvoir procéder aux opérations de sciage puis de désassemblage,
- réaliser par sciage des fentes de séparation transversales de chaque côté des positionneurs prothétiques, jusqu'à l'interface existant entre le moulage prothétique et le surmoulage **60**,
- séparer individuellement ou collectivement les éléments positionneurs **10** des éléments évasés **20**, par action sur les languettes **12** ou/et sur l'extrémité de la partie mâle **13** apparente par la face externe du surmoulage **60**.

## Revendications

1. Positionneur prothétique pour l'art dentaire, permettant de rendre amovible des portions d'empreintes prothétiques et d'obtenir celles-ci par coulée en une seule phase, constitué principalement d'un élément positionneur (**10**), supportant la partie positive de l'empreinte par l'intermédiaire d'un pivot (**11**) à gorge de rétention (**111**), venant s'emboîter, avec indexation, par l'intermédiaire d'une partie mâle (**13**), dans un élément évasé (**20**) faisant corps avec l'empreinte positive, caractérisé en ce que l'élément évasé (**20**) fait corps avec l'empreinte positive par l'intermédiaire de deux ergots (**21**) et de deux chevilles (**3**) servant à immobiliser l'ensemble par rapport à l'empreinte négative, par l'intermédiaire de languettes (**12**) prolongeant latéralement l'élément positionneur (**10**), en ce que la partie mâle (**13**) et l'élément évasé (**20**) ont une section rectangulaire dont les grands côtés sont orientés dans le même sens que les languettes (**12**) protégeant latéralement l'élément positionneur (**10**), en ce que l'indexation du pivot (**11**) par rapport à l'élément évasé (**20**) est obtenue par l'intermédiaire d'un tenon (**14**), situé à la base de la partie mâle (**13**), et dune mortaise (**22**), réalisée dans le côté correspondant de l'élément évasé (**20**), en ce que la mise en place est assurée en utilisant un paralléliseur, par l'intermédiaire d'un embout en matière plastique souple (**70**) s'emboîtant sur l'élément évasé (**20**), en ce que le matériau de moulage est retenu latéralement par un ruban en matériau semi-rigide (**40**) et en ce que l'élément positionneur (**10**) et l'élément évasé (**20**) sont réalisés en matière plastique rigide.

2. Positionneur prothétique selon la revendication 1, caractérisé en ce que les languettes (**12**), prolongeant latéralement l'élément positionneur (**10**), ont une section trapézoïdale dont la petite base est située à la partie inférieure.

3. Positionneur prothétique selon la revendication 1, caractérisé en ce que le ruban en matériau semi-rigide (**40**), assurant la rétention du matériau de moulage, sa fixe dans la pâte à modeler par l'intermédiaire d'ergots pointus (**41**) réalisés dans l'un des côtés du ruban et régulièrement reportés le long de celui-ci.

4. Positionneur prothétique selon la revendication 1, caractérisé en ce que les extrémités du ruban en matériau semi-rigide (**40**) sont solidarisables par l'intermédiaire de fentes (**42** et **43**), de longueur correspondant à la moitié de la largeur du ruban, réalisées chacune dans un des côtés du ruban, de façon à obtenir la solidarisation des extrémités du ruban par simple insertion de celui-ci dans les fentes (**42** et **43**) au niveau de ces dernières.

## Patentansprüche

1. Positioniervorrichtung für Zahnprothese, die es ermöglicht, Teile von Prothesenabdrücken hereausnehmbar zu machen und diese durch Gießen in einer einzigen Phase zu erhalten, im Prinzip bestehend aus einem Positionierelement (10), das den Positivteil des Abdrucks mittels eines Zapfens (11) mit Rückhalterille (111) trägt, der mit einem Steckeil (13) in ein konisch erweitertes Element (20) eingesteckt und verriegelt wird, das in einem Stück mit dem Positivabdruck ausgeführt ist,
dadurch gekennzeichnet, daß das konisch erweiterte Element (20) mit dem Positivabdruck mittels zweier Nasen (21) und zweier Stifte (3) ein Stück bildet, die dazu dienen, die Anordnung mittels Laschen (12), die das Positionierelement (10) seitlich verlängern, relativ zu dem Negativabdruck zu blockieren, daß der Steckteil (13) und das konisch erweiterte Element (20) einen rechtwinkligen Querschnitt aufweisen, dessen lange Seiten in der gleichen Richtung ausgerichtet sind wie die Laschen (12), die das Positionierelement (10) seitlich schützen, daß die Verriegelung des Zapfens (11) mit dem konisch erweiterten Element (20) mit Hilfe eines Zapfens (14), der sich an der Basis des Steckteils (13) befindet, und eines Zapfenlochs (22), das in der entsprechenden Seite des konisch erweiterten Elements (20) ausgeführt ist, erreicht wird, daß der Einbau unter Verwendung eines Parallelstellers mittels eines Ansatzstücks aus weichem Kunststoff (70) gewährleistet ist, das auf das konisch erweiterte Element (20) gesteckt wird, daß das Gußmaterial seitlich durch ein Band aus halbstarrem Material (40) gehalten wird und daß das Positionierelement (10) und das konisch erweiterte Element (20) aus starrem Kunststoff ausgeführt sind.

2. Positioniervorrichtung für Zahnprothese nach Anspruch 1,
dadurch gekennzeichnet, daß die Laschen (12), die das Positionierelement (10) seitlich verlängern, einen trapezförmigen Querschnitt haben, dessen kleine Basis sich unten befindet.

3. Positioniervorrichtung für Zahnprothese nach Anspruch 1,
dadurch gekennzeichnet, daß das Band aus halbstarrem Material (40), das den Halt Gußmaterials gewährleistet, in der zu modellierenden Masse mittels spitzer Nasen (41) Halt findet, die an einer der Seiten des Bandes und in regelmäßigen Abständen an diesem ausgeführt sind.

4. Positioniervorrichtung für Zahnprothese nach Anspruch 1,
dadurch gekennzeichnet, daß die Enden des Bands aus halbstarrem Material (40) mit Hilfe von Schlitzen (42 und 43) fest miteinander verbunden werden können, deren Längen der halben Breite des Bandes entspricht und die jeweils an einer der Seiten des Bandes ausgeführt sind, so daß die Enden des Bands miteinander verbunden werden können, indem dieses einfach in die Schlitze (42 und 43) in Höhe der letzteren hineingesteckt werden.

## Claims

1. Prosthetic positioner for dentistry, allowing prosthetic impression portions to be made removable, and the latter to be obtained by casting in a single phase, consisting principally of a positioner element (10) supporting the positive part of the impression by means of a pivot (11) with a retention groove (111), which fits, with indexation, by means of a male part (13), in a flared part (20) which is integral with the positive impression, characterised in that the flared element (20) is made integral with the positive impression by means of two lugs (21) and two pegs (3) used to immobilise the assembly with respect to the negative impression, by means of tongues (12) laterally extending the positioner element (10), in that the male part (13) and the flared element (20) have a rectangular cross section in which the long sides point in the same direction as the tongues (12) laterally extending the positioner element (10), in that the indexation of the pivot (11) with respect to the flared element (20) is obtained using a tenon (14) situated at the base of the male part (13), and a mortice (22), made in the corresponding side of the flared element (20), in that fitting is carried out using a paralleliser, by means of a flexible plastic adapter (70) fitting over the flared element (20), in that the moulding material is held laterally by a strip (40) of semi-rigid material, and in that the positioner element (10) and the flared element (20) are made from a rigid plastic material.

2. Prosthetic positioner according to Claim 1, characterised in that the tongues (12) laterally extending the positioner element (10) have a trapezoidal cross section whose short base is situated at the lower part.

3. Prosthetic positioner according to Claim 1, characterised in that the strip (40) of semi-rigid material, which retains the moulding material, is fixed in the paste to be modelled using pointed lugs (41) made in one of the sides of the strip, and regularly arranged along the latter.

4. Prosthetic positioner according to Claim 1, characterised in that the ends of the strip (40) of semi-rigid material can be solidly attached using slots (42, and 43), with a length corresponding to half the width of the strip, each made in one of the sides of the strip, so as solidly to attach the ends of the strip by simple insertion of the latter in the slits (42 and 43), level with them.
